(19) Europäisches Patentamt
European Patent Office
Office européen des brevets

(11) **EP 4 586 461 A1**

(12) **EUROPEAN PATENT APPLICATION**
published in accordance with Art. 153(4) EPC

(43) Date of publication:
**16.07.2025 Bulletin 2025/29**

(21) Application number: **23862916.6**

(22) Date of filing: **21.08.2023**

(51) International Patent Classification (IPC):
**H02J 50/12** (2016.01)   **H02M 3/335** (2006.01)
**H02M 7/537** (2006.01)   **H02J 7/00** (2006.01)

(52) Cooperative Patent Classification (CPC):
**H02J 50/12; H02J 50/80; H02M 3/335;**
**H02M 7/537;** H02J 7/00

(86) International application number:
**PCT/JP2023/029990**

(87) International publication number:
**WO 2024/053376 (14.03.2024 Gazette 2024/11)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **06.09.2022 JP 2022141717**

(71) Applicants:
• **OMRON Corporation**
 **Kyoto 600-8530 (JP)**
• **National University Corporation Chiba University**
 **Chiba-shi, Chiba 263-8522 (JP)**

(72) Inventors:
• **MISHIMA, Taichi**
 **Kyoto-shi, Kyoto 600-8530 (JP)**

• **ITO, Yuki**
 **Kyoto-shi, Kyoto 600-8530 (JP)**
• **OTA, Hiroaki**
 **Kyoto-shi, Kyoto 600-8530 (JP)**
• **NAGAOKA, Shingo**
 **Kyoto-shi, Kyoto 600-8530 (JP)**
• **UEMATSU, Takeshi**
 **Kyoto-shi, Kyoto 600-8530 (JP)**
• **SEKIYA, Hiroo**
 **Chiba-shi, Chiba 263-8522 (JP)**
• **KOMIYAMA, Yutaro**
 **Chiba-shi, Chiba 263-8522 (JP)**

(74) Representative: **HGF**
 **HGF Limited**
 **1 City Walk**
 **Leeds LS11 9DX (GB)**

(54) **WIRELESS POWER TRANSMISSION SYSTEM, WIRELESS POWER-TRANSMITTING CIRCUIT, AND WIRELESS POWER-RECEIVING CIRCUIT**

(57)    This wireless power transmission system includes: a wireless power-transmitter circuit including an inverter (2) that includes a first LC resonance circuit (21) including a power-transmitting inductor (Lt), the inverter (2) switching an input voltage at a prescribed switching frequency and a prescribed duty ratio, and transmitting a switched AC voltage from the power-transmitting inductor (Lt); and a wireless power-receiver circuit. The wireless power-receiver circuit includes: a rectifier circuit (3) that includes a second LC resonance circuit (31) that includes a power-receiving inductor (Lr) that is electromagnetically coupled with the power-transmitting inductor (Lt), the rectifier circuit (3) rectifying the AC voltage received by the power-receiving inductor and outputting the rectified voltage; and a regulator (4) that detects an output voltage from the regulator (4),

controls the rectified voltage based on the detected output voltage such that the output voltage becomes a prescribed voltage, and outputs the output voltage.

Fig. 1

**Description**

TECHNICAL FIELD

The present invention relates to a wireless power transmission system including a wireless power transmitter circuit and a wireless power receiver circuit that are electromagnetically coupled with each other, a wireless power transmitter circuit for the wireless power transmission system, and a wireless power receiver circuit for the wireless power transmission system.

BACKGROUND ART

Conventionally, moving bodies such as a wireless automatic guided vehicle (AGV) and an electric vehicle (EV) have rechargeable batteries, such as lithium ion batteries, onboard. In order to charge such rechargeable batteries, the AGV is moved to a charging station, and the power receiving coil onboard the AGV is electromagnetically coupled with the power transmitting coil in the charging station. The batteries are then charged non-contactly using a non-contact charging system.

PRIOR ART DOCUMENT

PATENT DOCUMENT

Patent Document 1: Japanese Patent Laid-open Publication No. JP2017-022804A

NON-PATENT DOCUMENT

Non-patent Document 1: Samer Aldhaher, et al., "Load-Independent Class E/EF Inverters and Rectifiers for MHz-Switching Applications," IEEE Transactions on Power Electronics, Vol. 33, No. 10, October 2018.

SUMMARY OF THE INVENTION

PROBLEMS TO BE SOLVED BY THE INVENTION

As mentioned earlier, non-contact charging is carried out by electromagnetically coupling the power receiving coil to the power transmitting coil, but there are the following changing factors.

(Changing Factor A) A change in the remaining amount charge in the rechargeable battery or a change in the operation of an apparatus that is a load leads to a change in the load.
(Changing Factor B) A positional offset between the power transmitting coil and the power receiving coil changes the degree of coupling k between the coils.

In other words, there is a problem that it becomes difficult to change output voltage or output current characteristics, and thus it becomes difficult to achieve soft switching such as zero-voltage switching (ZVS) or zero-current switching (ZCS).

In order to solve this problem, in Fig. 32 in Non-patent Document 1 (Fig. 6 in this application), as will be described later in "Findings of Inventors", a class-E inverter and a rectifier circuit are combined. However, use of this combination has had a problem that, despite being capable of making the output voltage constant as well as achieving the soft switching for the "changing factor A", this combination is only capable of achieving the soft switching, and fails to make the output voltage constant, for "changing factor B". In other words, there still remains a problem that the output voltage or output current characteristics change in the presence of a change in the degree of coupling k.

An object of the present invention is to solve the problem in the conventional examples, and to provide a wireless power transmission system, a wireless power transmitter circuit, and a wireless power receiver circuit for the wireless power transmission system capable of keeping the output voltage or the output current constant, with respect to a fluctuation in the degree of coupling k.

SOLUTIONS TO THE PROBLEMS

According to the first aspect of the present invention, there is provided a wireless power transmission system including: a wireless power transmitter circuit; and a wireless power receiver circuit. The wireless power transmitter circuit includes: an inverter that includes a first LC resonance circuit including a power transmitting inductor, that switches an input voltage at a predetermined switching frequency and a predetermined duty ratio, and that transmits a switched AC voltage from the power transmitting inductor. The wireless power receiver circuit includes: a rectifier circuit that includes a second LC resonance circuit including a power receiving inductor electromagnetically coupled with the power transmitting inductor, that rectifies an AC voltage received by the power receiving inductor, and that outputs a rectified voltage, and a first regulator that detects an output voltage from the first regulator, that controls the rectified voltage based on the detected output voltage to bring the output voltage to a predetermined voltage, and that outputs the output voltage.

According to the second aspect of the present invention, in the wireless power transmission system of the first aspect of the present invention, the wireless power transmitter circuit further includes a second regulator provided at a prior stage of the inverter, and the second regulator includes a second current control transistor. The second regulator has, as operation modes:

(A) a constant current mode for detecting an output current from the second regulator, controlling the input voltage to bring the output current to a predetermined current by controlling the second current control transistor based on the detected output current, and outputting the output current to the inverter; and

(B) a fixed time ratio mode for controlling the input voltage by controlling the second current control transistor at a constant duty ratio, and outputting the output voltage to the inverter.

The first regulator has, as operation modes:

(A) a constant voltage mode for detecting an output voltage from the first regulator, controlling the rectified voltage based on the detected output voltage to bring the output voltage to a predetermined voltage, and outputting the output voltage; and
(B) a constant current mode for detecting an output current from the first regulator, controlling the rectified voltage based on the detected output current to bring the output current to a predetermined current, and outputting the output voltage.

The first regulator further includes: a first communication circuit that transmits an operation mode switching signal to the second regulator or receives an operation mode switching signal from the second regulator, at time of selectively switching between the constant voltage mode and the constant current mode. The second regulator further includes: a second communication circuit that transmits an operation mode switching signal to the first regulator or receives an operation mode switching signal from the first regulator at time of selectively switching between the fixed time ratio mode and the constant current mode. When the first regulator operates in the constant voltage mode, the second regulator operates in the fixed time ratio mode. When the first regulator operates in the constant current mode, the second regulator operates in the constant current mode.

EFFECTS OF THE INVENTION

In the manner described above, with the wireless power transmission system according to the present invention, it is possible to keep the output voltage or the output current constant, with respect to a fluctuation in the degree of coupling k.

BRIEF DESCRIPTION OF DRAWINGS

Fig. 1 is a circuit diagram illustrating a configuration example of a wireless power transmission system according to a first embodiment.

Fig. 2 is a circuit diagram illustrating a configuration example of a wireless power transmission system according to a second embodiment.

Fig. 3 is an equivalent circuit diagram for describing how an output voltage can be kept to be constant in the first embodiment.

Fig. 4A is a circuit diagram illustrating a configuration example of an inverter 2A that is a first modified embodiment of the inverter 2 in Figs. 1 and 2.

Fig. 4B is a circuit diagram illustrating a configuration example of an inverter 2B that is a second modified embodiment of the inverter 2 in Figs. 1 and 2.

Fig. 4C is a circuit diagram illustrating a configuration example of an inverter 2C that is a third modified embodiment of the inverter 2 in Figs. 1 and 2.

Fig. 4D is a circuit diagram illustrating a configuration example of an inverter 2D that is a fourth modified embodiment of the inverter 2 in Figs. 1 and 2.

Fig. 4E is a circuit diagram illustrating a configuration example of an inverter 2E that is a fifth modified embodiment of the inverter 2 in Figs. 1 and 2.

Fig. 4F is a circuit diagram illustrating a configuration example of an inverter 2F that is a sixth modified embodiment of the inverter 2 in Figs. 1 and 2.

Fig. 4G is a circuit diagram illustrating a configuration example of an inverter 2G that is a seventh modified embodiment of the inverter 2 in Figs. 1 and 2.

Fig. 5A is a circuit diagram illustrating a configuration example of a rectifier circuit 3A that is a first modified embodiment of the rectifier circuit 3 in Figs. 1 and 2.

Fig. 5B is a circuit diagram illustrating a configuration example of a rectifier circuit 3B that is a second modified embodiment of the rectifier circuit 3 in Figs. 1 and 2.

Fig. 5C is a circuit diagram illustrating a configuration example of a rectifier circuit 3C that is a third modified embodiment of the rectifier circuit 3 in Figs. 1 and 2.

Fig. 5D is a circuit diagram illustrating a configuration example of a rectifier circuit 3D that is a fourth modified embodiment of the rectifier circuit 3 in Figs. 1 and 2.

Fig. 5E is a circuit diagram illustrating a configuration example of a rectifier circuit 3E that is a fifth modified embodiment of the rectifier circuit 3 in Figs. 1 and 2.

Fig. 5F is a circuit diagram illustrating a configuration example of a rectifier circuit 3F that is a sixth modified embodiment of the rectifier circuit 3 in Figs. 1 and 2.

Fig. 6 is a circuit diagram illustrating a configuration of a load-independent synchronous class-E rectifier circuit for a wireless power transmission system according to a first conventional example disclosed in Non-patent Document 1.

Fig. 7 is a circuit diagram illustrating a configuration of a load-independent synchronous class-EF inverter for a wireless power transmission system according to a second conventional example disclosed in Non-patent Document 1.

DETAILED DESCRIPTION

Hereinafter, embodiments according to the present invention and modified embodiments thereof will be described with reference to drawings. Note that the same reference numerals are given to the same or similar components.

FINDINGS OF INVENTORS

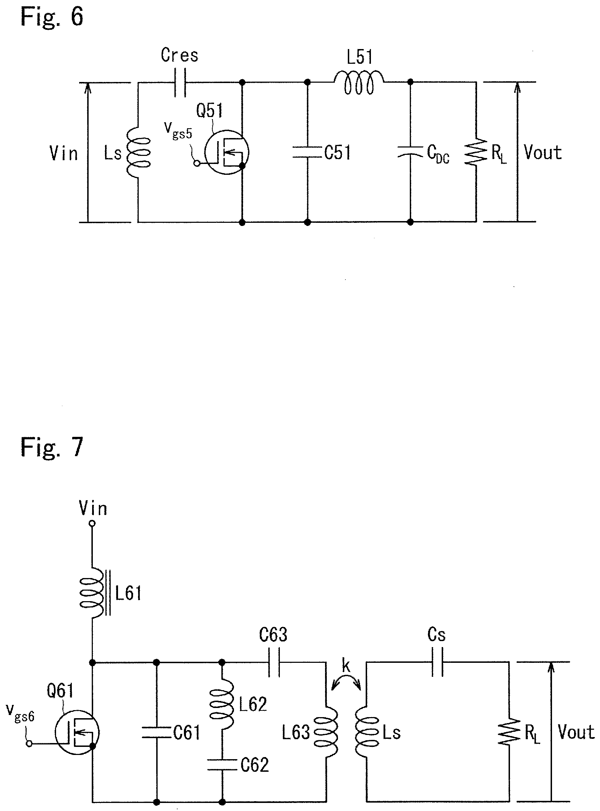

Fig. 6 is a circuit diagram illustrating a configuration of a load-independent synchronous class-E rectifier circuit for a wireless power transmission system according to a first conventional example, as disclosed in Fig. 32 in Non-patent Document 1. Referring to Fig. 6, the load-independent synchronous class-E rectifier circuit is configured to include a series inductor Ls, a resonant capacitor Cres, a switching MOS field-effect transistor (hereinafter, referred to as a switching MOS transistor) Q51, and a n smoothing circuit that includes an inductor L51 and capacitors C51, $C_{DC}$. In this case, being "load-independent" means a condition of circuit output characteristics (voltage, current, or power) being constant even when a resistance value or an impedance value of a load such as a secondary battery connected to the output of the circuit fluctuates. With the load-independency, the soft switching can be achieved regardless of the load.

In the rectifier circuit illustrated in Fig. 6 configured as described above, an induced AC voltage is applied to the series inductor Ls, switched and rectified by the switching MOS transistor Q51 in accordance with a gate control voltage $v_{gs5}$, and the rectified DC voltage Vout is output to a load resistor $R_L$.

Fig. 7 is a circuit diagram illustrating a configuration of a load-independent synchronous class-EF inverter for a wireless power transmission system according to second conventional example disclosed in Fig. 17 in Non-patent Document 1. The class-EF inverter in Fig. 7 is configured to include a switching MOS transistor Q61, an input inductor L61, capacitors C61, C62, C63, Cs, and inductors L62, L63, Ls. In this case, the capacitors C62, C63 and the inductors L62, L63 together form a first LC resonance circuit having a predetermined resonance frequency, and the inductor Ls and the capacitor Cs together form a second LC resonance circuit having a predetermined resonance frequency.

In the inverter in Fig. 7 configured as described above, the AC voltage is applied to the switching MOS transistor Q61 via the input inductor L61, and is switched by the switching MOS transistor Q61 in accordance with a gate control voltage $v_{gs6}$. Only the predetermined resonance frequency component is then filtered in the resonance circuit, and the resultant filtered AC voltage is output to the load resistor $R_L$.

As is clear from Figs. 6 and 7, there has been a problem that, although a combination of the class-E inverter and the rectifier circuit is capable of making the output voltage constant and achieving soft switching for a change in the load (changing factor A), this combination cannot achieve the soft switching, despite being capable of making the output voltage constant, for a change in the degree of coupling k (changing factor B). In other words, there still remains a problem that the output voltage or output current characteristics change in the presence of a change in the degree of coupling k. An embodiment of the present invention discloses a wireless power transmission system capable of making an output voltage or an output current constant, with respect to a fluctuation in the degree of coupling k.

FIRST EMBODIMENT

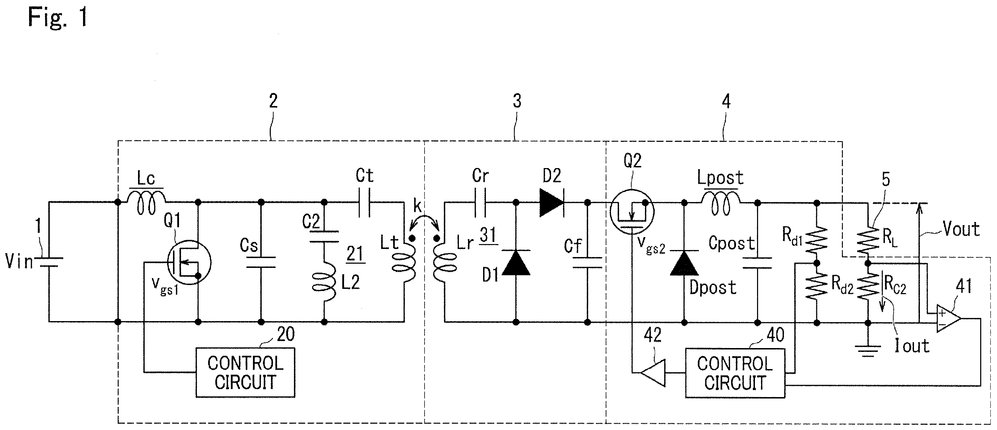

Fig. 1 is a circuit diagram illustrating a configuration example of a wireless power transmission system according to a first embodiment. Referring to Fig. 1, the wireless power transmission system is configured to include an inverter 2, a rectifier circuit 3, and a post-regulator 4. In this case, the inverter 2 configures a "wireless power transmitter circuit", and the rectifier circuit 3 and the post-regulator 4 configure a "wireless power receiver circuit".

Referring to Fig. 1, an input voltage Vin from a DC power supply 1 is switched by the inverter 2, and then rectified by the rectifier circuit 3. The post-regulator 4 then controls the rectified DC voltage to bring the rectified DC voltage to a predetermined output voltage, and the output voltage Vout is output to the load resistor $R_L$. Note that a power transmitting inductor Lt in the inverter 2 and a power receiving inductor Lr in the rectifier circuit 3 are provided near each other to become electromagnetically coupled with each other at a degree of coupling k.

Referring to Fig. 1, the inverter 2 is configured to include an input inductor Lc (choke coil), a switching MOS transistor Q1, a series capacitor Cs for charging and discharging, a resonant capacitor C2, a resonant inductor L2, a power transmitting capacitor Ct, the power transmitting inductor Lt, and a control circuit 20. The input voltage Vin from the DC power supply 1 is input via the input inductor Lc. The switching MOS transistor Q1 then switches the input voltage Vin in accordance with a gate control voltage (gate control signal) $v_{gs1}$ output from the control circuit 20. In this case, the control circuit 20 switches the input voltage Vin by generating a gate control voltage $v_{gs1}$ that is a PWM signal having a constant switching frequency fsw and a constant duty ratio (time ratio), and by applying the gate control voltage $v_{gs1}$ to the gate (control terminal) of the switching MOS transistor Q1. The series capacitor Cs is then charged with the switched input voltage Vin, and then discharged. The discharged voltage is then input to the series LC resonance circuit 21 including the capacitors C2, Ct and the inductors L2, Lt, (substantially being an RLC resonance circuit, taking the loss resistance into consideration) and only a predetermined resonance frequency component is extracted. The power receiving inductor Lr in the rectifier circuit 3 then receives the energy of the AC voltage via the power transmitting inductor Lt.

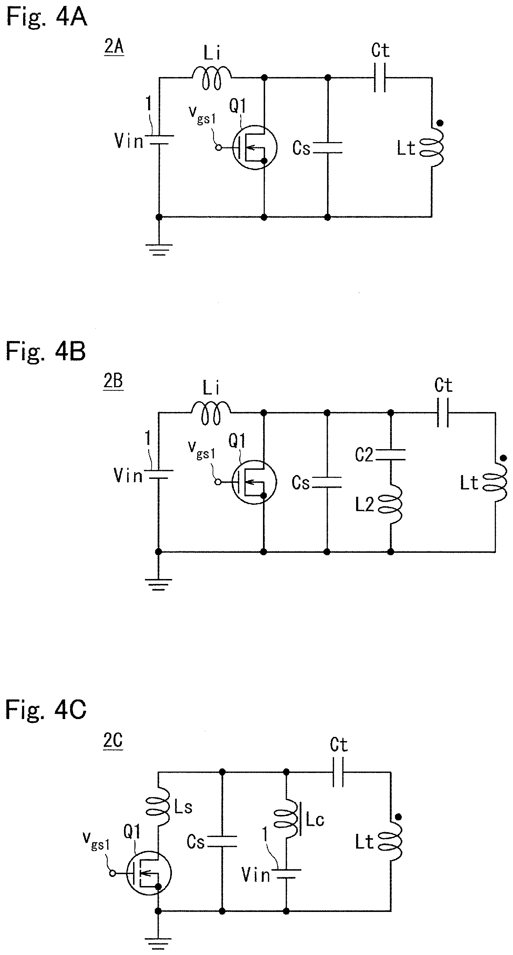

The inverter 2 configured as described above configures a load-independent class-EF inverter, but the present invention is not limited thereto, and may also be configured as a load-independent class-E inverter, for example, as will be described later with reference to Figs. 4A to 4G.

The rectifier circuit 3 is configured to include a power receiving inductor Lr, a power receiving capacitor Cr, diodes D1, D2 for half-bridge rectifier, and a smoothing capacitor Cf. In the rectifier circuit 3, the series LC resonance circuit 31 including the power receiving inductor Lr and the power receiving capacitor Cr extracts only a predetermined resonance frequency component of the AC voltage received by the power receiving inductor Lr, and the diodes D1, D2 rectify the resultant voltage. In this case, the resonance frequency of the series LC resonance circuit 31 in the rectifier circuit 3 and the resonance frequency of the series LC resonance circuit 21 in the inverter 2 are set to substantially the same frequency, for example. The rectified voltage is then smoothed by the smoothing capacitor Cf, and the smoothed voltage is input to the inductor $L_{post}$ and the diode $D_{post}$, via the source and the drain of the switching MOS transistor Q2 in the post-regulator 4.

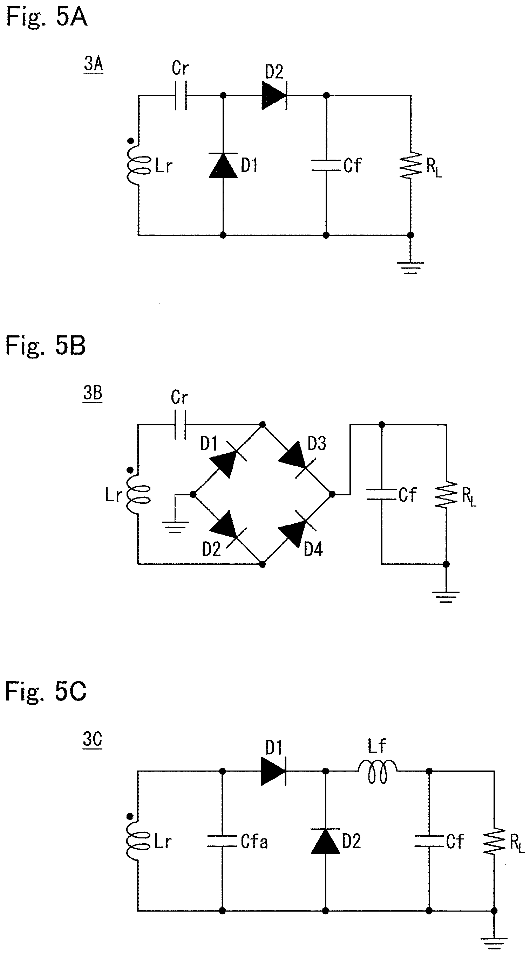

The rectifier circuit 3 configured as described above configures a current-driven class-D rectifier circuit, but the present invention is not limited thereto, and may also be configured as a rectifier circuit that is robust against a reactance component, for example, as will be described later with reference to Figs. 5A to 5F.

The post-regulator 4 is configured to include a switching MOS transistor Q2, a smoothing inductor $L_{post}$ (choke coil), a half-wave rectifier diode $D_{post}$, a smoothing capacitor $C_{post}$, voltage-dividing resistors $R_{d1}$, $R_{d2}$, for voltage detection, a current detecting resistor $R_{C2}$, a differential amplifier 41 for detecting current and amplifying voltage, a control circuit 40 for controlling current, and a gate driver 42.

In the post-regulator 4 configured as described above, the current of the rectified voltage output from the rectifier circuit 3 is controlled by the switching MOS transistor Q2 in accordance with a PWM gate signal applied to the gate (control terminal) by the control circuit 40 via the gate driver 42, and then it is half-wave rectified by the diode $D_{post}$. The rectified voltage is smoothed by a smoothing circuit including the smoothing inductor $L_{post}$ and the smoothing capacitor $C_{post}$, and then the output voltage Vout is output to the load resistor $R_L$. In this case, the output voltage Vout is divided by the voltage-dividing resistors Rd1, Rd2, and the divided voltage is input to the control circuit 40, as a voltage-detection voltage for the output voltage Vout. The current detecting resistor RC2 then detects an output current Iout flowing through the load resistor $R_L$, and the differential amplifier 41 amplifies a detection voltage that is substantially proportional to the output current Iout, and then inputs the amplified voltage to the control circuit 40.

In the first embodiment, the post-regulator 4 operates as a buck converter in a constant output voltage mode (CV mode: constant voltage mode), and the control circuit 40 controls the duty ratio of the PWM gate signal to be applied to the gate of the switching MOS transistor Q2 based on the voltage-detecting voltage to bring the output voltage Vout to a predetermined voltage. The post-regulator 4 may also be configured as a boost converter or a buck-boost converter.

In the wireless power transmission system configured as described above, by using the load-independent class-E inverter 2 and the rectifier circuit 3, which does not have any dependency on a reactance component, it becomes possible to combine the resonance circuit 21 of the inverter 2 with the resonance circuit 31 of the rectifier circuit 3 to be electromagnetically coupled with each other, and to achieve soft switching (ZVS) and a constant output (constant output voltage Vout or constant output current Iout), without changing other circuit parameters (e.g., the input voltage Vin, the switching frequency fsw, or the duty ratio) even with the presence of load fluctuations of any range.

Further, because the post-regulator 4 is provided to a stage subsequent to the rectifier circuit 3 to perform the constant voltage control, by controlling the duty ratio of the post-regulator 4 with respect to a fluctuation of the degree of coupling k, the impedance of the subsequent stage appears constant from the viewpoint of the inverter 2. In this manner, it becomes possible to achieve the soft switching (ZVS) and a constant output (a constant output voltage Vout or a constant output current Iout).

In this case, a supplementary description will be given on why the output becomes constant when the impedance of the subsequent stage appears constant from the viewpoint of the inverter 2. In this case, in the wireless power transmission system in Fig. 1, the gain G of the subsequent stage when seen from the input terminal of the inverter 2 is expressed by the following equation:

$$G = Voeq/Vin \qquad (1).$$

Where Voeq is the effective value of a voltage to be applied to an equivalent load resistor $R_{eq}$ of the subsequent stage from the viewpoint of the inverter 2. In this case, the equivalent load resistor $R_{eq}$ is expressed by the following equation:

$$R_{eq} = (\pi^2 k^2 \omega^2 L t L r D_{post}^2)/2 R_L \qquad (2),$$

where $\omega$ is the frequency of the AC voltage, and $D_{post}$ is the duty ratio of the post-regulator 4.

As is clear from Equation (2), by controlling to reduce the duty ratio (the ON time of the time ratio) $D_{post}$ of the post-regulator 4 when the degree of coupling k is relatively high, and controlling to increase the duty ratio (the ON time of the time ratio) $D_{post}$ of the post-regulator 4 when the degree of coupling k is relatively low, it is possible to control the equivalent load resistor $R_{Leq}$ to remain constant, and, as a result, it becomes possible to control the voltage Voeq (Equation (1)) applied to the equivalent load resistor $R_{Leq}$ to remain constant. In the first embodiment, when the degree of coupling k fluctuates, by causing the control circuit 40 to calculate the duty ratio of the post-regulator 4 in such a manner that a desired output voltage Vout (constant impedance) is achieved, it is possible to control the output voltage Vout to a predetermined voltage.

As described above, according to the first embodiment, it is possible to provide a wireless power transmission system capable of making the output voltage Vout constant with respect to a fluctuation in the degree of coupling k.

SECOND EMBODIMENT

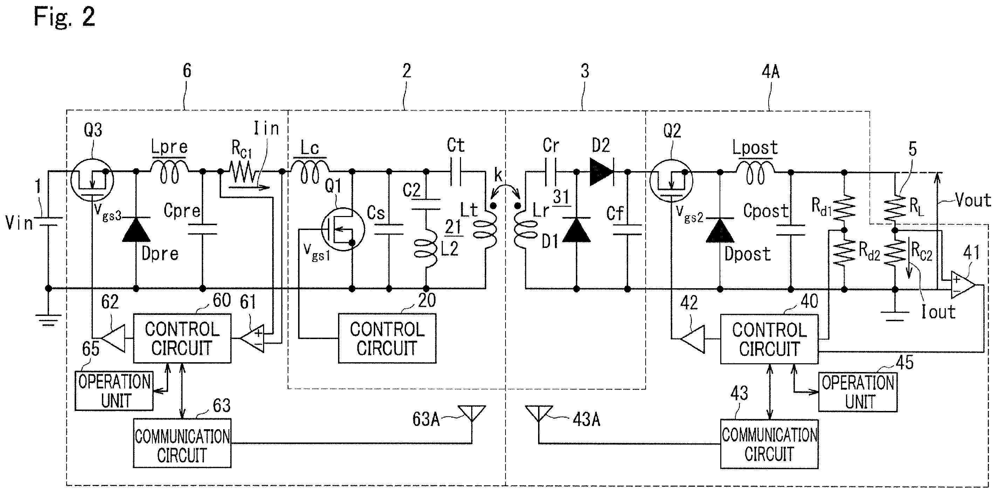

Fig. 2 is a circuit diagram illustrating a configuration example of a wireless power transmission system according to a second embodiment. Referring to Fig. 2, the wireless power transmission system according to the second embodiment is different from the wireless power transmission system according to the first embodiment in Fig. 1 in the following points.

(1) A pre-regulator 6 that includes a communication circuit 63, including an antenna 63A, and a control circuit 60 is provided to be inserted between the DC power supply 1 and the inverter 2.
(2) Instead of the post-regulator 4, a 4A post-regulator 4A further including a communication circuit 43 that performs wireless communication with the communication circuit 63 is provided.
(3) The post-regulator 4A further includes an operation unit 45 that is connected to the control circuit 40, and operated by a user to switch the operation mode.
(4) The pre-regulator 6 further includes an operation unit 65 connected to the control circuit 60, and operated by a user to switch the operation mode.

Hereinafter, these differences will be described.
Referring to Fig. 2, the pre-regulator 6 and the inverter 2 configure a "wireless power transmitter circuit", and the rectifier circuit 3 and the post-regulator 4A configure a "wireless power receiver circuit".
The pre-regulator 6 is configured to include a switching MOS transistor Q3, a smoothing inductor $L_{pre}$ (choke coil), a half-wave rectifier diode $D_{pre}$, a smoothing capacitor $C_{pre}$, a current detecting resistor $R_{C1}$, a differential amplifier 61 for detecting current and amplifying voltage, a control circuit 60 for controlling current, and a gate driver 62.
In the pre-regulator 6 configured as described above, the current of the DC voltage Vin from the DC power supply 1 is controlled by the switching MOS transistor Q3 in accordance with the PWM gate signal applied to the gate (control terminal) from the control circuit 60 via the gate driver 62, and then it is half-wave rectified by the diode $D_{pre}$. The rectified voltage is smoothed by a smoothing circuit including a smoothing inductor $L_{pre}$ and a smoothing capacitor $C_{pre}$, and then the output voltage is output to the input inductor Lc of the inverter 2 via the current detecting resistor $R_{C1}$. An input current Iin flowing through the current detecting resistor $R_{C1}$ is detected by the current detecting resistor $R_{C1}$. A detection voltage that is substantially proportional to the input current Iin is amplified by the differential amplifier 61 and then input to the control circuit 60.
The pre-regulator 6 configured as described above operates in a constant output current mode (CC mode: constant current mode) or a predetermined constant duty ratio mode. In the CC mode, the control circuit 60 operates in a proportional component control mode, and controls the duty ratio of the PWM gate signal to be applied to the gate of the switching MOS transistor Q3 in such a manner that the input current Iin is brought to a predetermined current. In the constant duty ratio mode, by contrast, the control circuit 60 sets the duty ratio of the PWM gate signal to be applied to the gate of the switching MOS transistor Q3 to a constant value that is a predetermined value.
As described in the first embodiment, the post-regulator 4A is operable either in the constant output voltage mode (CV mode) or the constant output current mode (CC mode), and further includes the communication circuit 43 having the antenna 43A for wirelessly transmitting an operation mode switching signal to the control circuit 60 in the pre-regulator 6 when the user switches the operation mode using the operation unit 45. The control circuit 60 in the pre-regulator 6 sets the pre-regulator 6 to operate in the constant duty ratio mode in response to the operation mode switching signal for the CV mode from the control circuit 40. By contrast, the control circuit 60 in the pre-regulator 6 sets the pre-regulator 6 to operate in the CC mode in response to an operation mode switching signal for the CC mode from the control circuit 40.
The operation mode switching signal, indicating each of these operation modes, generates when the user performs a switching operation using the operation unit 45 that is connected to the control circuit 40 in the post-regulator 4A, for example, and the operation mode switching signal is transmitted and received only when the operation mode is switched, without always being transmitted or received. In addition, the operation mode switching signal may generate when the user performs a switching operation using the operation unit 65 connected to the control circuit 60 in the pre-regulator 6. In such a case, the operation mode switching signal is transmitted from the control circuit 60 to the control circuit 40 via the communication circuits 63 and 43.

In the second embodiment,

(A) when the wireless power transmission system is in the CC mode,
the pre-regulator 6 operates in the CC mode, and the post-regulator 4A operates in the CC mode; and
(B) when the wireless power transmission system is in a CV mode,
the pre-regulator 6 operates in the constant duty ratio mode (fixed time ratio mode), and the post-regulator 4A operates in the CV mode.

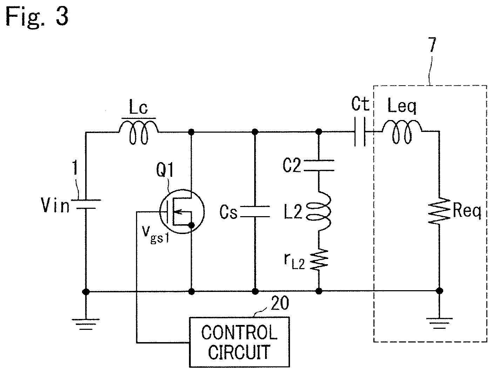

The operation in the CV mode according to the first embodiment and an operation in the CC mode according to the second embodiment will be described below with reference to Fig. 3 and the like. Fig. 3 is an equivalent circuit diagram for describing how the output voltage can be kept to be constant in the first embodiment.

In the CV mode according to the first embodiment,

(1) the control is performed in the constant CV mode in which the output voltage is kept to be constant, when seen from the DC power supply 1 to the subsequent stage;
(2) the control is performed in the constant CC mode in which the output current is kept to be constant, when seen from the inverter 2 to the subsequent stage;
(3) the control is performed in the constant CV mode in which the output voltage is kept to be constant, when seen from the rectifier circuit 3 to the subsequent stage; and
(4) the control is performed in the constant CV mode in which the output voltage is kept to be constant, when seen from the post-regulator 4 to the subsequent stage.

Referring to Fig. 3, representing an equivalent circuit 7 that is a circuit subsequent to the power transmitting inductor Lt of the inverter 2 as a series circuit of the equivalent inductor Leq and the equivalent resistor Req, the equivalent resistor Req is represented by the following equation, in a manner similar to that of Equation (2).

$$\mathrm{R_{eq}}$$
$$= (k^2\omega^2 LtLr)/(R_L + r_{Lr}) + r_{Lt}$$
$$\approx (\pi^2 k^2 \omega^2 LtLrD_{post}^2)/2R_L \qquad (3),$$

where $r_{Lr}$ is a loss resistance of the power receiving inductor Lr, and $r_{Lt}$ is a loss resistance of the power transmitting inductor Lt. As is clear from Equation (3), the wireless power transmission system according to the first embodiment as a whole is controlled in the CV mode.

In the CC mode according to the second embodiment,

(1) the control is performed in the constant CV mode in which the output voltage is kept to be constant, when seen from the DC power supply 1 to the subsequent stage;
(2) the control is performed in the constant CC mode in which the output current is kept to be constant, when seen from the pre-regulator 6 to the subsequent stage;
(3) the control is performed in the constant CV mode in which the output voltage is kept to be constant, when seen from the inverter 2 to the subsequent stage;
(4) the control is performed in the constant CC mode in which the output current is kept to be constant, when seen from the rectifier circuit 3 to the subsequent stage; and
(5) the control is performed in the constant CC mode in which the output current is kept to be constant, when seen from the post-regulator 4A to the subsequent stage.

In other words, the wireless power transmission system according to the second embodiment as a whole is controlled in the CC mode.

As described above, while the output to the load resistor $R_L$ has a constant voltage (CV) characteristic in the first embodiment, the post-regulator 4A according to the second embodiment can output a constant current in the CC mode by performing duty control with the addition of the pre-regulator 6. At this time, the duty control of the post-regulator 4A is the same as that of the post-regulator 4 according to the first embodiment. Because the current lin flowing through the input inductor $L_{pre}$ (choke coil), which is one of the components of the pre-regulator 6, is detected and the duty is controlled to make this current lin constant, the control of the pre-regulator 6 is closed on the power-transmission side.

The reason why the communication between the power transmitting side and receiving side is added is that, because control can be performed not only in the CV mode but also in the CC mode, it is necessary to synchronize the control between power transmitting side and receiving side at the timing switching over to the CC mode or the CV mode, in the entire wireless power transmission system. In the CV mode of the wireless power transmission system, the duty ratio is controlled by stopping the duty control of the pre-regulator 6 and setting the duty ratio constant, and by causing the post-regulator 4A to operate in the CV mode, as a circuit similar to that according to the first embodiment. In the CC mode of the wireless power transmission system, the pre-regulator 6 and the post-regulator 4A are caused to operate in the CC mode.

With the configuration according to the second embodiment, in addition to the effects achieved by the first embodiment, which are enabling load-independent soft switching as well as coping with a fluctuation of the degree of coupling k, it is possible to charge the load in the CC mode or the CV mode (when the load is the secondary battery). Because only communication required between the power transmitting side and receiving side is the communication at the time of switching between the CC mode and the CV mode, there is no risk of a surge in the output voltage or current, due to the interruption in the communication.

MODIFIED EMBODIMENTS

Modified embodiments that are inverters that are usable in replacement of the inverter 2 in Figs. 1 and 2 will be described below.

FIRST MODIFIED EMBODIMENT OF INVERTER 2

Fig. 4A is a circuit diagram illustrating a configuration example of an inverter 2A that is a first modified embodiment of the inverter 2 in Figs. 1 and 2. In Fig. 4A, the inverter 2A is configured to include an input inductor Li, the switching MOS transistor Q1, the series capacitor Cs, the power transmitting capacitor Ct, and the power transmitting inductor Lt.

In the inverter 2A configured as described above, the input voltage Vin from the DC power supply 1 is input to the switching MOS transistor Q1 via the input inductor Li, and is then switched by the switching MOS transistor Q1. Only a predetermined resonance frequency component of the switched voltage is filtered by an LC resonance circuit including the capacitors Cs, Ct and the power transmitting inductor Lt, and then the filtered AC voltage is transmitted from the power transmitting inductor Lt. In this case, the inverter 2A configures a load-independent class-E inverter, operates in the ZVS mode, and can operate in the CV mode.

SECOND MODIFIED EMBODIMENT OF INVERTER 2

Fig. 4B is a circuit diagram illustrating a configuration example of an inverter 2B that is a second modified embodiment of the inverter 2 in Figs. 1 and 2. Referring to Fig. 4B, the inverter 2B is configured to include the input inductor Li, the switching MOS transistor Q1, the series capacitor Cs, the capacitor C2, the inductor L2, the power transmitting capacitor Ct, and the power transmitting inductor Lt.

In the inverter 2B configured as described above, the input voltage Vin from the DC power supply 1 is input to the switching MOS transistor Q1 via the input inductor Li, and is then switched by the switching MOS transistor Q1. Only a predetermined resonance frequency component of the switched voltage is filtered by an LC resonance circuit including the capacitors Cs, C2, Ct, the inductor L2, and the power transmitting inductor Lt, and then the filtered AC voltage is transmitted from the power transmitting inductor Lt via the power transmitting capacitor Ct. In this case, the inverter 2B configures a load-independent class-E inverter, operates in the ZVS mode, and can operate in the CC mode.

THIRD MODIFIED EMBODIMENT OF INVERTER 2

Fig. 4C is a circuit diagram illustrating a configuration example of an inverter 2C that is a third modified embodiment of the inverter 2 in Figs. 1 and 2. In Fig. 4C, the inverter 2C is configured to include the inductor Ls, the switching MOS transistor Q1, the series capacitor Cs, the inductor Lc, the power transmitting capacitor Ct, and the power transmitting inductor Lt.

In the inverter 2C configured as described above, the input voltage Vin from the DC power supply 1 is input to the switching MOS transistor Q1 via the inductors Lc, Ls, and is then switched by the switching MOS transistor Q1. Only a predetermined resonance frequency component of the switched voltage is filtered by an LC resonance circuit including the capacitors Cs, Ct and the power transmitting inductor Lt, and then the filtered AC voltage is transmitted from the power transmitting inductor Lt. In this case, the inverter 2C configures a load-independent inverse class-E inverter, operates in the ZCS mode, and can operate in the CC mode.

FOURTH MODIFIED EMBODIMENT OF INVERTER 2

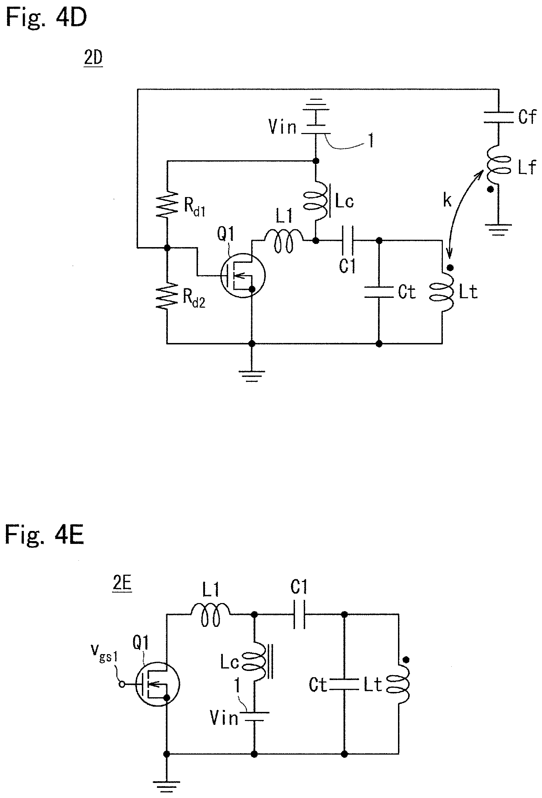

Fig. 4D is a circuit diagram illustrating a configuration example of an inverter 2D that is a fourth modified embodiment of the inverter 2 in Figs. 1 and 2. Referring to Fig. 4D, the inverter 2D is configured to include inductors L1, Lc, the switching MOS transistor Q1, a capacitor C1, the power transmitting capacitor Ct, voltage-dividing resistors $R_{d1}$, $R_{d2}$, a feedback circuit including a capacitor Cf and an inductor Lf, the power transmitting capacitor Ct, and the power transmitting inductor Lt.

In the inverter 2D configured as described above, the divided voltage of causing the voltage-dividing resistors $R_{d1}$, $R_{d2}$ to divide the input voltage Vin from the DC power supply 1 becomes the gate voltage supplied to the switching MOS transistor Q1, and is also fed back to the power transmitting inductor Lt via the inductor Lf in the feedback circuit. In addition, the input voltage Vin is input to the switching MOS transistor Q1 via the inductors Lc, L1, and is then switched by the switching MOS transistor Q1. Only a predetermined resonance frequency component of the switched voltage is filtered by a resonance circuit including the capacitor Ct and the inductor Lt via the capacitor C1, and then the filtered voltage is transmitted from the power transmitting inductor Lt. In this case, the inverter 2D configures a load-independent inverse class-E anti-coupled oscillation inverter, operates in the ZCS mode, and can operate in the CV mode.

FIFTH MODIFIED EMBODIMENT OF INVERTER 2

Fig. 4E is a circuit diagram illustrating a configuration example of an inverter 2E that is a fifth modified embodiment of the inverter 2 in Figs. 1 and 2. Referring to Fig. 4E, the inverter 2E is configured to include the inductors L1, Lc, the switching MOS transistor Q1, the capacitor C1, the power transmitting capacitor Ct, and the power transmitting inductor Lt.

In the inverter 2E configured as described above, the input voltage Vin from the DC power supply 1 is input to the switching MOS transistor Q1 via the inductors Lc, L1, and is then switched by the switching MOS transistor Q1. Only a predetermined resonance frequency component of the switched voltage is filtered by a resonance circuit including the power transmitting capacitor Ct and the power transmitting inductor Lt via the inductor L1 and the capacitor C1, and then the filtered voltage is then transmitted from the power transmitting inductor Lt. In this case, the inverter 2E configures a load-independent inverse class-E inverter, operates in the ZCS mode, and can operate in the CV mode.

SIXTH MODIFIED EMBODIMENT OF INVERTER 2

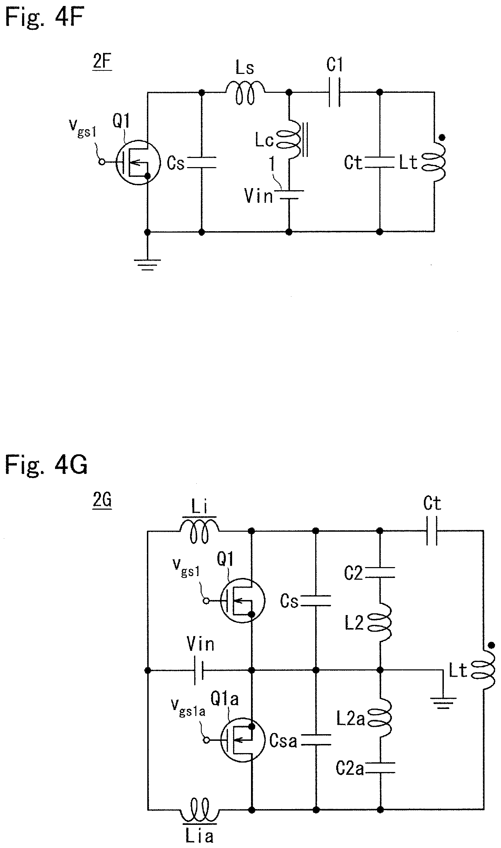

Fig. 4F is a circuit diagram illustrating a configuration example of an inverter 2F that is a sixth modified embodiment of the inverter 2 in Figs. 1 and 2. Referring to Fig. 4F, the inverter 2F is configured to include the inductors Lc, Ls, the capacitor Cs, the switching MOS transistor Q1, the capacitor C1, the power transmitting capacitor Ct, and the power transmitting inductor Lt.

In the inverter 2F configured as described above, the input voltage Vin from the DC power supply 1 is input to the switching MOS transistor Q1 via the inductors Lc, Ls, and is then switched by the switching MOS transistor Q1. Only a predetermined resonance frequency component of the switched voltage is filtered by a resonance circuit including the power transmitting capacitor Ct and the power transmitting inductor Lt via the capacitor Cs, the inductor Ls, and the capacitor C1, and then the filtered voltage is then transmitted from the power transmitting inductor Lt. In this case, the inverter 2F configures a load-independent class-E inverter, operates in the ZVS mode, and can operate in the CC mode.

SEVENTH MODIFIED EMBODIMENT OF INVERTER 2

Fig. 4G is a circuit diagram illustrating a configuration example of an inverter 2G that is a seventh modified embodiment of the inverter 2 in Figs. 1 and 2. Referring to Fig. 4G, the inverter 2G is obtained by modifying the inverter 2B illustrated in Fig. 4B into a push-pull inverter, and further includes a switching MOS transistor Q1a, a series capacitor Csa, inductors Lia, L2a, and a capacitor C2a, compared with the configuration of the inverter 2B. Note that the switching MOS transistor Q1a is switched by a gate control voltage $v_{gs1a}$ from the control circuit 20.

In the inverter 2G configured as described above, the input voltage Vin from the DC power supply 1 is input to the switching MOS transistors Q1 and Q1a via the input inductor Li and Lia, and then switched by the switching MOS transistor Q1 and Q1a, respectively. Only a predetermined resonance frequency component of each of the switched voltages is filtered by corresponding one of an LC resonance circuit including the capacitors Cs, C2, Ct, the inductor L2, and the power transmitting inductor Lt, and an LC resonance circuit including the capacitors Csa, C2a, the inductor L2a, the power transmitting inductor Lt, and then the filtered AC voltage is transmitted from the power transmitting inductor Lt via the capacitor Ct. In this case, the inverter 2G configures a load-independent push-pull class-EF inverter, operates in the ZVS mode, and can operate in the CC mode.

Modified embodiments of the rectifier circuits that are usable in replacement of the rectifier circuit 3 in Figs. 1 and 2 will be described below.

FIRST MODIFIED EMBODIMENT OF RECTIFIER CIRCUIT 3

Fig. 5A is a circuit diagram illustrating a configuration example of a rectifier circuit 3A that is a first modified embodiment of the rectifier circuit 3 in Figs. 1 and 2. Referring to Fig. 5A, the rectifier circuit 3A is configured to include the power receiving inductor Lr, the power receiving capacitor Cr, the diodes D1, D2, and the smoothing capacitor Cf.

In the rectifier circuit 3A configured as described above, the AC voltage is received by the power receiving inductor Lr, half-wave rectified by the diodes D1, D2 via the power receiving capacitor Cr, smoothed by the smoothing capacitor Cf, and is then output to the load resistor $R_L$. In this case, the rectifier circuit 3A configures a half-bridge current-driven class-D rectifier circuit.

SECOND MODIFIED EMBODIMENT OF RECTIFIER CIRCUIT 3

Fig. 5B is a circuit diagram illustrating a configuration example of a rectifier circuit 3B that is a second modified embodiment of the rectifier circuit 3 in Figs. 1 and 2. Referring to Fig. 5B, the rectifier circuit 3B is configured to include the power receiving inductor Lr, the power receiving capacitor Cr, the diodes D1 to D4, and the smoothing capacitor Cf.

In the rectifier circuit 3B configured as described above, the AC voltage is received by the power receiving inductor Lr, full-wave rectified by the diodes D1 to D4 via the power receiving capacitor Cr, smoothed by the smoothing capacitor Cf, and is then output to the load resistor $R_L$. In this case, the rectifier circuit 3B configures a full-bridge current-driven class-D rectifier circuit.

THIRD MODIFIED EMBODIMENT OF RECTIFIER CIRCUIT 3

Fig. 5C is a circuit diagram illustrating a configuration example of a rectifier circuit 3C that is a third modified embodiment of the rectifier circuit 3 in Figs. 1 and 2. Referring to Fig. 5C, the rectifier circuit 3C is configured to include the power receiving inductor Lr, the smoothing capacitor Cfa, the diodes D1, D2, the smoothing inductor Lf, and the smoothing capacitor Cf.

In the rectifier circuit 3C configured as described above, the AC voltage is received by the power receiving inductor Lr, and then smoothed by the smoothing capacitor Cfa. The smoothed voltage is full-wave rectified by the diodes D1, D2, then smoothed by the smoothing inductor Lf and the smoothing capacitor Cf, and output to the load resistor $R_L$. In this case, the rectifier circuit 3C configures a class-D half-bridge voltage-driven rectifier circuit.

FOURTH MODIFIED EMBODIMENT OF RECTIFIER CIRCUIT 3

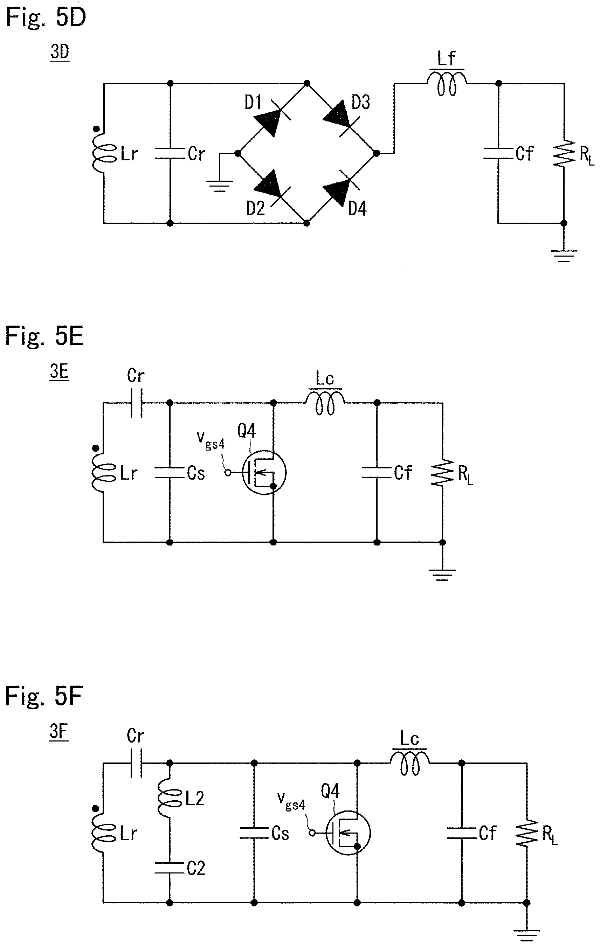

Fig. 5D is a circuit diagram illustrating a configuration example of a rectifier circuit 3D that is a fourth modified embodiment of the rectifier circuit 3 in Figs. 1 and 2. Referring to Fig. 5D, the rectifier circuit 3D is configured to include the power receiving inductor Lr, the smoothing inductor Cr, the diodes D1 to D4, and the smoothing inductor Lf, and the smoothing capacitor Cf.

In the rectifier circuit 3D configured as described above, the AC voltage is received by the power receiving inductor Lr, and then smoothed by the smoothing capacitor Cr. The smoothed voltage is full-wave rectified by the diodes D1 to D4, then smoothed by the smoothing inductor Lf and the smoothing capacitor Cf, and output to the load resistor $R_L$. In this case, the rectifier circuit 3D configures a full-bridge voltage-driven class-D rectifier circuit.

FIFTH MODIFIED EMBODIMENT OF RECTIFIER CIRCUIT 3

Fig. 5E is a circuit diagram illustrating a configuration example of a rectifier circuit 3E that is a fifth modified embodiment of the rectifier circuit 3 in Figs. 1 and 2. Referring to Fig. 5E, the rectifier circuit 3E is configured to include the power receiving inductor Lr, the smoothing capacitor Cs, the series capacitor Cr, a switching MOS transistor Q4, a smoothing inductor Lc, and the smoothing capacitor Cf.

In the rectifier circuit 3E configured as described above, the AC voltage is received by the power receiving inductor Lr, and then filtered by a resonance circuit including the inductor Lr and the capacitors Cr and Cs and having a predetermined resonance frequency. The filtered AC voltage is switched by the switching MOS transistor Q4 in accordance with a predetermined gate control voltage $v_{gs4}$, smoothed by the smoothing inductor Lc and the smoothing capacitor Cf, and then output to the load resistor $R_L$. In this case, the rectifier circuit 3E configures a load-independent class-E rectifier circuit.

SIXTH MODIFIED EMBODIMENT OF RECTIFIER CIRCUIT 3

Fig. 5F is a circuit diagram illustrating a configuration example of a rectifier circuit 3F that is a sixth modified embodiment of the rectifier circuit 3 in Figs. 1 and 2. Referring to Fig. 5F, the rectifier circuit 3F is configured to include the power receiving inductor Lr, the power receiving capacitor Cr, the inductor L2, the capacitor C2, the smoothing capacitor Cs, the switching MOS transistor Q4, the smoothing inductor Lc, and the smoothing capacitor Cf.

In the rectifier circuit 3F configured as described above, the AC voltage is received by the power receiving inductor Lr, and then filtered by a resonance circuit including the inductor Lr, the power receiving capacitor Cr, the inductor L2, and the capacitor C2 and having a predetermined resonance frequency. The filtered AC voltage is switched by the switching MOS transistor Q4 in accordance with a predetermined gate control voltage $v_{gs4}$, smoothed by the smoothing inductor Lc and the smoothing capacitor Cf, and then output to the load resistor $R_L$. In this case, the rectifier circuit 3F configures a load-independent class-EF rectifier circuit.

OTHER MODIFIED EMBODIMENTS

In the embodiment and modified embodiments described above, each of the post-regulators 4, 4A and the pre-regulator 6 may be a step-up DC-DC converter, a step-down DC-DC converter, or a step-up and step-down DC-DC converter, for example.

Although the MOS transistors Q1 to Q4 and Q1a are used in the embodiments and modified embodiments described above, the present invention is not limited thereto, and other types of transistors such as bipolar transistors may also be used.

In the embodiments described above, the communication circuits 43, 63 are wireless communication circuits that use wireless communication, but the present invention is not limited thereto, and may be wired communication circuits that use wired communication.

INDUSTRIAL APPLICABILITY

As described above in detail, according to the present invention, it is possible to provide a wireless power transmission system, a wireless power transmitter circuit, and a wireless power receiver circuit for the wireless power transmission system capable of making an output voltage or an output current constant with respect to a fluctuation of the degree of coupling k. The wireless power transmission system may be applied to power supply to a moving body such as an AGV or an EV, and may also be applied to power supply to a slip ring (rotating body) used in a pallet of a manufacturing line, a robot arm, or the like.

REFERENCE SIGNS LIST

1 DC power supply
2 Inverter
3 Rectifier circuit
4 and 4A Post-regulator
5 Load
6 Pre-regulator
7 Subsequent equivalent circuit
20 Control circuit
21 Resonance circuit
31 Resonance circuit
40 Control circuit
41 Differential amplifier
42 Gate driver
43 Communication circuit
43A Antenna
45 Operation unit
60 Control circuit
61 Differential amplifier
62 Gate driver
63 Communication circuit
63A Antenna
65 Operation unit
C1, C2, Cf, Cfa, $C_{post}$, $C_{pre}$, Cr, Cs, Ct, C51 to C63, Cres, and $C_{DC}$ Capacitor
D1, D2, $D_{pre}$, and $D_{post}$ Diode
L1, L2, Lc, Leq, Li, $L_{post}$, Lpre, Lr, Ls, Lt, and L51 to L63 Inductor
Q1 to Q4, Q51, and Q61 MOS transistor
$R_{C1}$, $R_{C2}$, $R_{d1}$, $R_{d2}$, Req, and $r_{L2}$ Resistor
$R_L$ Load resistor

**Claims**

1.  A wireless power transmission system comprising:

    a wireless power transmitter circuit; and
    a wireless power receiver circuit,
    wherein the wireless power transmitter circuit comprises:

    an inverter that includes a first LC resonance circuit including a power transmitting inductor, that switches an input voltage at a predetermined switching frequency and a predetermined duty ratio, and that transmits a switched AC voltage from the power transmitting inductor,
    wherein the wireless power receiver circuit comprises:

        a rectifier circuit that includes a second LC resonance circuit including a power receiving inductor electromagnetically coupled with the power transmitting inductor, that rectifies an AC voltage received by the power receiving inductor, and that outputs a rectified voltage, and
        a first regulator that detects an output voltage from the first regulator, that controls the rectified voltage based on the detected output voltage to bring the output voltage to a predetermined voltage, and that outputs the output voltage.

2.  The wireless power transmission system as claimed in claim 1,
    wherein the first regulator comprises a first current control transistor that controls a current related to an AC voltage from the rectifier circuit, and that controls the rectified voltage to bring the output voltage to a predetermined voltage, based on the detected output voltage, by controlling a duty ratio of a control signal for a control terminal of the first current control transistor.

3.  The wireless power transmission system as claimed in claim 1,

    wherein the inverter includes a class-E inverter, an inverse class-E inverter, a class-EF inverter, or an inverse class-E anti-coupled oscillation inverter,
    wherein the rectifier circuit includes a class-D rectifier circuit, a class-E rectifier circuit, or a class-EF rectifier circuit, and
    wherein the first regulator includes a DC-DC converter.

4.  The wireless power transmission system as claimed in any one of claims 1 to 3,

    wherein the wireless power transmitter circuit further includes a second regulator provided at a prior stage of the inverter,
    wherein the second regulator includes a second current control transistor,
wherein the second regulator has, as operation modes:

(A) a constant current mode for detecting an output current from the second regulator, controlling the input voltage to bring the output current to a predetermined current by controlling the second current control transistor based on the detected output current, and outputting the output current to the inverter; and
(B) a fixed time ratio mode for controlling the input voltage by controlling the second current control transistor at a constant duty ratio, and outputting the output voltage to the inverter,

wherein the first regulator has, as operation modes:

(A) a constant voltage mode for detecting an output voltage from the first regulator, controlling the rectified voltage based on the detected output voltage to bring the output voltage to a predetermined voltage, and outputting the output voltage; and
(B) a constant current mode for detecting an output current from the first regulator, controlling the rectified voltage based on the detected output current to bring the output current to a predetermined current, and outputting the output voltage,

wherein the first regulator further includes a first communication circuit that transmits an operation mode switching signal to the second regulator or receives an operation mode switching signal from the second regulator, at time of selectively switching between the constant voltage mode and the constant current mode, wherein the second regulator further includes a second communication circuit that transmits an operation mode switching signal to the first regulator or receives an operation mode switching signal from the first regulator at time of selectively switching between the fixed time ratio mode and the constant current mode, wherein, when the first regulator operates in the constant voltage mode, the second regulator operates in the fixed time ratio mode, and wherein, when the first regulator operates in the constant current mode, the second regulator operates in the constant current mode.

5. The wireless power transmission system as claimed in claim 4,
wherein the second regulator includes a DC-DC converter.

6. A wireless power transmitter circuit for the wireless power transmission system as claimed in any one of claims 1 to 3,
wherein the wireless power transmitter circuit includes the inverter.

7. A wireless power receiver circuit for the wireless power transmission system as claimed in any one of claims 1 to 3,
wherein the wireless power receiver circuit includes the rectifier circuit and the first regulator.

8. A wireless power transmitter circuit for the wireless power transmission system as claimed in claim 4,
wherein the wireless power transmitter circuit includes the second regulator and the inverter.

9. A wireless power receiver circuit for the wireless power transmission system as claimed in claim 4,
wherein the wireless power receiver circuit includes the rectifier circuit and the first regulator.

Fig. 1

Fig. 2

Fig. 3

Fig. 4A

Fig. 4B

Fig. 4C

Fig. 4D

<u>2D</u>

Fig. 4E

<u>2E</u>

Fig. 4F

Fig. 4G

## Fig. 5A

## Fig. 5B

## Fig. 5C

Fig. 5D

3D

Fig. 5E

3E

Fig. 5F

3F

## Fig. 6

## Fig. 7

**EP 4 586 461 A1**

## INTERNATIONAL SEARCH REPORT

| International application No. |
|---|
| **PCT/JP2023/029990** |

### A. CLASSIFICATION OF SUBJECT MATTER

*H02J 50/12*(2016.01)i; *H02M 3/335*(2006.01)i; *H02M 7/537*(2006.01)i; *H02J 7/00*(2006.01)n

According to International Patent Classification (IPC) or to both national classification and IPC

### B. FIELDS SEARCHED

Minimum documentation searched (classification system followed by classification symbols)

H02J50/12; H02M3/335; H02M7/537; H02J7/00; H02M1/00; H02M7/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-530946 A (IMPERIAL COLLEGE INNOVATIONS LIMITED) 11 November 2021 (2021-11-11)<br>    whole document | 1-9 |
| A | US 6301128 B1 (DELTA ELECTRONICS INC) 09 October 2001 (2001-10-09)<br>    whole document | 1-9 |
| A | JP 2017-22804 A (CANON KK) 26 January 2017 (2017-01-26)<br>    whole document | 1-9 |
| A | WO 2018/185810 A1 (MITSUBISHI ELECTRIC CORPORATION) 11 October 2018 (2018-10-11)<br>    whole document | 1-9 |
| A | US 2021/0135666 A1 (XI'AN JIAOTONG UNIVERSITY) 06 May 2021 (2021-05-06)<br>    whole document | 1-9 |
| A | US 2017/0324277 A1 (IMPERIAL INNOVATIONS LTD) 09 November 2017 (2017-11-09)<br>    whole document | 1-9 |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 September 2023** | **12 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/029990**

| Patent document cited in search report | | | Publication date (day/month/year) | Patent family member(s) | | | Publication date (day/month/year) |
|---|---|---|---|---|---|---|---|
| JP | 2021-530946 | A | 11 November 2021 | AU | 2019276285 | A | |
| | | | | whole document | | | |
| | | | | CA | 3101405 | A | |
| | | | | whole document | | | |
| | | | | CN | 112534677 | A | |
| | | | | whole document | | | |
| | | | | EP | 3804083 | A1 | |
| | | | | whole document | | | |
| | | | | US | 2021/0203192 | A1 | |
| | | | | whole document | | | |
| | | | | WO | 2019/229217 | A1 | |
| | | | | whole document | | | |
| US | 6301128 | B1 | 09 October 2001 | (Family: none) | | | |
| JP | 2017-22804 | A | 26 January 2017 | JP | 6525775 | B2 | |
| | | | | whole document | | | |
| WO | 2018/185810 | A1 | 11 October 2018 | JP | 6884201 | B2 | |
| | | | | whole document | | | |
| US | 2021/0135666 | A1 | 06 May 2021 | CN | 110654253 | A | |
| | | | | whole document | | | |
| US | 2017/0324277 | A1 | 09 November 2017 | CA | 3023069 | A | |
| | | | | whole document | | | |
| | | | | CN | 109417312 | A | |
| | | | | whole document | | | |
| | | | | EP | 3453099 | A1 | |
| | | | | whole document | | | |
| | | | | WO | 2017/191459 | A1 | |
| | | | | whole document | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017022804 A

**Non-patent literature cited in the description**

- **SAMER ALDHAHER et al.** Load-Independent Class E/EF Inverters and Rectifiers for MHz-Switching Applications. *IEEE Transactions on Power Electronics*, 10 October 2018, vol. 33